# EUROPEAN PATENT SPECIFICATION

(11) **EP 2 133 618 B1**
(45) Date of publication and mention of the grant of the patent: **17.04.2013**
(21) Application number: 07861030.0
(22) Date of filing: 15.10.2007
(51) Int. Cl.: F16L 55/1645, F16L 58/06

(54) **METHOD FOR RESTORING A PIPELINE AND A PIPELINE**
VERFAHREN ZUM SANIEREN EINER ROHRLEITUNG UND ROHRLEITUNG
PROCEDE DE RESTAURATION DE CANALISATION ET CANALISATION ASSOCIEE

(30) Priority: 22.03.2007 RU 2007110546
(43) Date of publication of application: 16.12.2009
(73) Proprietor: Abuev, Alexzander Gebekovich, Moscow 119421 (RU); Kravchenco, Dmitri Vladimirovich, Moscow 121059 (RU); Snigur, Gennadi Nikolaevich, Moscow 129594 (RU)
(72) Inventor: Abuev, Alexzander Gebekovich, Moscow 119421 (RU); Kravchenco, Dmitri Vladimirovich, Moscow 121059 (RU); Snigur, Gennadi Nikolaevich, Moscow 129594 (RU)
(74) Representative: Andrae, Steffen
(86) International application number: PCT/RU2007/000559
(87) International publication number: WO 2008/115091

(56) References cited:
- EP-A1- 0 476 295
- WO-A1-01/75351
- JP-A- 59 120 274
- RU-C1- 2 059 145
- RU-C1- 2 241 896
- RU-C2- 2 227 242
- US-A- 6 026 861

## Description

### Field of the Invention

The invention relates to the field of constructing and restoring a pipeline without ripping thereof and could be used in restoring thereof by deposing an inner coating in constructing and restoring a pipeline by the ditch-free technique.

### Background of the Invention

Known are various methods for repairing (restoring) subsurface pipelines, the most preferable of which is the ditch-free one, for example, drawing the plastic pipes of forming a new pipe in the existing pipeline without destructing the existing pipeline (RU 2241896C1) or with destructing the existing pipeline (RU 2025635C1), or the cement-and-sand coating of the inner surface of the pipeline being restored.

The most widespread is the method for coating the inner surface of pipeline with a cement-and-sand composition.

Thus, known are methods for applying cement-and-sand coatings onto the inner surface of pipeline by the centrifugal splashing (RU 2037082C1) [1].

The disadvantages of this method consist in non-uniformity of the coating, both in cross-section and along the length of the pipeline, inability of facing apparatus for applying a coating at line bends (pipe branches), small length of the section being treated in a single technological cycle, as well as the bulking of the used equipment.

Also known is the method for applying a protective composition onto the inner surface of pipeline wherein the protective composition placed between elastic spacers is forced through the pipeline void (RU 2059145C1, RU 2014908C1, RU 2001105770A1) [2].

The disadvantage of this method consists in that it cannot be used at sufficiently extended sections of pipeline, when using compositions having an increased viscosity such as, for example, concrete grouts. Moreover, because of the spacer construction, it is difficult to adjust the layer thickness and uniformity applied by this technique.

The closest one to the claimed invention group is the method and apparatus for coating the inner surface of pipeline according to RU 2227242C2 [3] (corresponding to the preamble of claim 1). The method provides steps of: cleaning successively the pipeline from corrosion while restoring thereof by forcing water disposed between elastic tools through the pipeline void, and applying a plugging layer of the cement-and-sand (concrete) protective composition while tamping (couping) holes by forcing the cement-and-sand (concrete) protective composition disposed between the elastic tool and applicator tool through the pipeline void. The known technical solution [3] discloses also the repair complex for restoring a pipeline comprising: means for a telemetric inspection of the pipeline; compressor-pumping station; launching and receiving chambers; device for preparing and feeding a slurry; and device for applying a coating onto the pipeline, which latter device including an elastic tool and applicator tool having a flexible construction that permits to apply coatings having a specified thickness of the protective composition both at straight sections and pipe branches of any complexity, diameter, and burial depth.

The disadvantage of the known technical solution consists in low mechanical strength of the pipeline being restored (repaired) due to both pipe construction being created and employed materials (cement-and-sand mixture).

The task, to which solution are directed the method and apparatus for applying a coating (the claimed invention group), consists in enhancing strength and operational characteristics of the applied coating and overall pipe construction, increasing the technological effectiveness of the process, ensuring a possibility for enlarging a length of the section being repaired in a single technological cycle up to 1000 m.

### Summary of the Invention

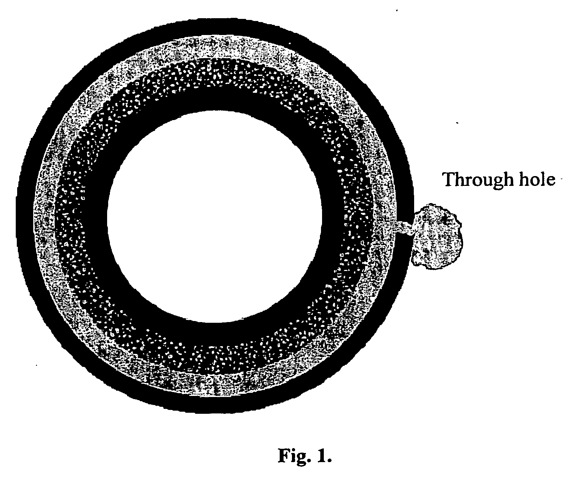

The technical result is achieved by a step of forming a new pipe in the passageway of the pipeline being repaired, which is used as a formwork when making the new pipe, from successively applied layers (Fig. 1) of specially developed FORT (ΦOPT) group polymer-cement compositions (Table 1), each of which compositions carrying the strictly functional purpose and functional physical-and-mechanical characteristics and operating in the formed pipe as a single system construction.

The technical result is achieved by that in the method for restoring a pipeline including steps of: performing a telemetric inspection (telediagnosis) of the pipeline; cleaning successively the pipeline from corrosion by forcing water disposed between elastic tools through the pipeline void; and applying an undercoat plugging layer by forcing the concrete protective composition disposed between the elastic tool and applicator tool through the pipeline void; further including, after the step of applying the undercoat plugging layer, a step of applying successively layers in the passageway of the restored pipeline serving simultaneously as a formwork when making a new pipe, which layers carry functions of a heavy-loaded layer being smooth or having longitudinally placed stiffening ribs and a protective operational layer, for which purpose the method including steps of: mounting a S-shaped technological pipe branch at the input of the pipeline, inserting an elastic tool thereinto, providing the pipeline with an spreading chamber, inserting into that chamber an applicator tool having exchangeable smooth collar or profiled collar, and mounting that chamber onto the pipeline branch, whereupon pumping between the tools as the concrete composition a FORT group polymer-cement composition having a various content depending on the layer designation with the following component ratio, weight %:
for the undercoat plugging layer:

| | | |
|---|---|---|
| 1. | Portland cement 400 | 35.2 - 39.6 |
| 2. | Quartz sand (grain size 0.35) | 41.2 - 45.4 |
| 3. | Latex (in powder form) | 3.0 - 7.0 |
| 4. | Corrosion inhibitor | 0.4 - 2.1 |
| 5. | Water-retaining additive | 0.03 - 0.07 |
| 6. | Polymer cementitious additive | 0.5 - 1.9 |
| 7. | Water | balance |

for the heavy-loaded layer:

| | | |
|---|---|---|
| 1. | Portland cement 400 or 500 or 550 | 29.0 - 34.3 |
| 2. | Dolomitic meal | 2.7 - 4.5 |
| 3. | Plastifier | 0.005- 0.03 |
| 4. | Quartz sand (grain size 0.1-0.63) | 40.2 - 45.2 |
| 5. | Polymer cementitious additive | 1.1 - 3.0 |
| 6. | Antifoamer | 0.02 - 0.06 |
| 7. | Water-retaining additive | 0.03 - 1.0 |
| 8. | Polyacrylonitrile or carbon composite or chrome-nickel fiber | 6.0 - 10.0 |
| 9. | Water | balance |

for the operational layer:

| | | |
|---|---|---|
| 1. | Portland cement 400 or 500 | 33.2 - 42.0 |
| 2. | Dolomitic meal | 2.5 - 4.8 |
| 3. | Plastifier | 0.005- 0.03 |
| 4. | Quartz sand (grain size 0.1-0.63) | 38.5 - 48.4 |
| 5. | Polymer cementitious additive | 1.1 - 3.5 |
| 6. | Antifoamer | 0.02 - 0.075 |
| 7. | Water-retaining additive | 0.04 - 1.2 |
| 8. | Water | balance |

wherein, during the step of applying the heavy-loaded layer having longitudinally placed stiffening ribs using the applicator tool provided with the profiled collar, performing a step of making longitudinal technological valleys in the body of the undercoat plugging layer being applied, and, upon setting this layer, performing a step of applying by the applicator tool having the smooth application edge the heavy-loaded layer from the FORT group polymer-cement composition rich of polyacrylic, carbon composite or metal fiber, which heavy-loaded layer fills the technological valleys thus forming the longitudinal stiffening ribs.

Moreover, the technical result is achieved also in that the pipeline restored by the method of claim 1 and including the restored pipeline itself and the undercoat plugging layer, further comprising layers that carry functions of a heavy-loaded layer being smooth or having longitudinally placed stiffening ribs disposed between the undercoat plugging layer and heavy-loaded layer, and a protective operational layer from a FORT group polymer-cement composition having a various content depending on the layer designation, thus forming a single system construction of the new pipe, with the following component ratio, weight %:
for the undercoat plugging layer:

| | | |
|---|---|---|
| 1. | Portland cement 400 | 35.2 - 39.6 |
| 2. | Quartz sand (grain size 0.35) | 41.2 - 45.4 |
| 3. | Latex (in powder form) | 3.0 - 7.0 |
| 4. | Corrosion inhibitor | 0.4 - 2.1 |
| 5. | Water-retaining additive | 0.03 - 0.07 |
| 6. | Polymer cementitious additive | 0.5 - 1.9 |
| 7. | Water | balance |

for the heavy-loaded layer:

| | | |
|---|---|---|
| 1. | Portland cement 400 or 500 or 550 | 29.0 - 34.3 |
| 2. | Dolomitic meal | 2.7 - 4.5 |
| 3. | Plastifier | 0.005- 0.03 |
| 4. | Quartz sand (grain size 0.1-0.63) | 40.2 -45.2 |
| 5. | Polymer cementitious additive | 1.1 - 3.0 |
| 6. | Antifoamer | 0.02 - 0.06 |
| 7. | Water-retaining additive | 0.03 - 1.0 |
| 8. | Polyacrylonitrile or carbon composite or chrome-nickel fiber | 6.0 - 10.0 |
| 9. | Water | balance |

for the operational layer:

| | | |
|---|---|---|
| 1. | Portland cement 400 or 500 | 33.2 - 42.0 |
| 2. | Dolomitic meal | 2.5 - 4.8 |
| 3. | Plastifier | 0.005- 0.03 |
| 4. | Quartz sand (grain size 0.1-0.63) | 38.5 - 48.4 |
| 5. | Polymer cementitious additive | 1.1 - 3.5 |
| 6. | Antifoamer | 0.02 - 0.075 |
| 7. | Water-retaining additive | 0.04 - 1.2 |
| 8. | Water | balance. |

The method is implemented using a mobile repair complex for restoring a pipeline according the method of claim 1, comprising: means for a telemetric inspection (telediagnosis) of the pipeline; device for preparing and feeding a slurry; compressor-pumping station (accumulation container); wherein the device for the telemetric inspection of the pipeline including: a self-propelled, remotely-operated robot coupled with a control panel and provided with two TV cameras, at least one of which is the round-looking camera, a robot locating system, a pipeline section tilt angle determining system, a non-contact thickness gauge, a line detector, and a leak detector; the device for preparing and feeding a slurry being provided with a pneumatic injector for feeding the polymer-cement slurries containing the metal or long-stapled fiber into the spreading chamber, the mentioned equipment being arranged on a car frame and coupled during the technological process with a technical station equipped with autonomous power supply means for autonomous power service being also arranged on the car frame. Herewith, the technical station is connected, when performing the telemetric inspection of the pipeline - to the device for the telemetric inspection of the pipeline, when performing the cleaning - to the compressor-pumping station, and when performing the application of the polymer-cement slurry, the technical station is connected in parallel to the compressor-pumping station and device for preparing and feeding a slurry.

In order for applying layers of the restored pipeline by the method of claim 1, an apparatus is developed comprising an applicator tool in the form of elastic collars mounted successively on a flexible axle, the applicator tool being provided with exchangeable smooth collar and profiled collar, and in order for applying the undercoat plugging layer, the applicator tool being provided with a collar being smooth or having a profiled edge, fins 2 to 15 mm high and 10 to 20 mm wide being spaced 10 to 30 mm apart in a circumferential direction of the collar having a profiled edge, and in order for applying the heavy-loaded layer, the applicator tool being provided with a collar having a smooth spreading edge, wherein, besides the collars having the profiled and smooth edges, the tool being additionally provided with technological collars having leaf-like resilient elements.

The newly manufactured (restored) pipe consists of the following functional layers:
- The undercoat plugging layer. The active corrosion inhibitors protect durably the inner surface of the pipeline being restored. This layer possesses an ability for enhancing the adhesion of subsequent layers to steel (body of the pipe being repaired) 1.8 times and performs simultaneously a function of the plugging slurry for sealing corrosion through-holes in the pipe being repaired and ground water galls. The thickness of the applied layer is 4.0 mm.
- The heavy-loaded layer (frame). The heavy-loaded layer is produced from a polymer-cement mixture containing metal or polymer fiber and being an internal reinforcement element bearing all dynamic loads, the layer possessing unique mechanical properties. The presence of the metal or polymer fiber in the layer hinders the crack formation. The layer has very high fatigue endurance, withstands a pressure up to 50 atm, possesses a high elasticity modulus, bending and tension strength, and good adhesion to the undercoat layer. The thickness of the applied layer is 80 mm.
- Operational (protective) layer. The polymer-cement layer is applied on the basis of the operational purpose of the pipeline (cold and hot water, gas, oil, canalization, etc.), it could be heat-resisting, acid-resisting, sulfate-resisting, neutral. Due to the surface smoothness, it enhances the hydrodynamic parameters of the pipeline, has health certificate for potable water. The thickness of the applied layer is up to 20 mm.

The Table 1 shows the physical-and-mechanical characteristics of the developed "FORT" group polymer-cement compositions.

The Table 2 shows formulations of the polymer-cement composition depending on the layer purpose, weight %

Remark for the Table 2: column 1 - polyacrylonitrile fiber;
column 2 - carbon composite fiber;
column 3 - chrome-nickel (metal) fiber.

It follows from the Table 1 that the advantages of the polymer-cement over the cement concrete consist in greater tension strength, better chemical stability, lesser fragility and water permeability.

In so doing, introducing into the composition the plastifier responsible for flowability and placeability of concrete results in reducing water permeability, raising strength and durability of the slurry or concrete being hardened, and decreasing cement consumption. And introducing the polymer cementitious additive enhances adhesion and surface strength of concrete. Introducing the corrosion inhibitor passivates the rust layer and is necessary for corrosion prevention.

For preparing the polymer-cement composition (mixture), the following grades of the mixture components were used, for example:
Plastifier - Melflux
Polymer cementitious additive - Neolith P7200/6000
Antifoamer - Dofomex AP 122
Water-retaining additive - Mecellose FMC 60150.

It should be generally noted that the additives to the polymer-cement employed in the claimed method and apparatus ensure: reducing water consumption for mixing concrete, increasing density, reducing shrinkage, enhancing strength, increasing adhesion to steel, raising corrosion resistance, raising cavitation resistance, reducing elasticity modulus, increasing tension strength, raising compressive resistance, raising crack resistance of the coating, increasing strength development dynamic.

### Brief Description of the Drawings

The claimed invention group is explained by reference to the accompanying drawings, wherein:
Fig. 1 shows the cross-section of the pipe with the applied layers;
Fig. 2 shows the diagram of performing the technological process;
Fig. 3 shows the diagram of performing the cleaning;
Fig. 4-1 shows the diagram of preparing the layer application;
Fig. 4-2 shows the diagram of applying the layer;
Fig. 5 shows the cross-section of the pipe with the applied layers with elements reinforced longitudinally with steel fiber;
Fig. 6 depicts the spreading profiled collar.

### Best Embodiment of the Invention

The method for restoring (repairing) a pipeline is carried out as follows.

According to the existing plans of the pipeline arrangement, the location of wells, their diameters and distance between them are determined, the pipeline being repaired is released from liquid, and stop valves are removed from the beginning and end of the section being repaired.

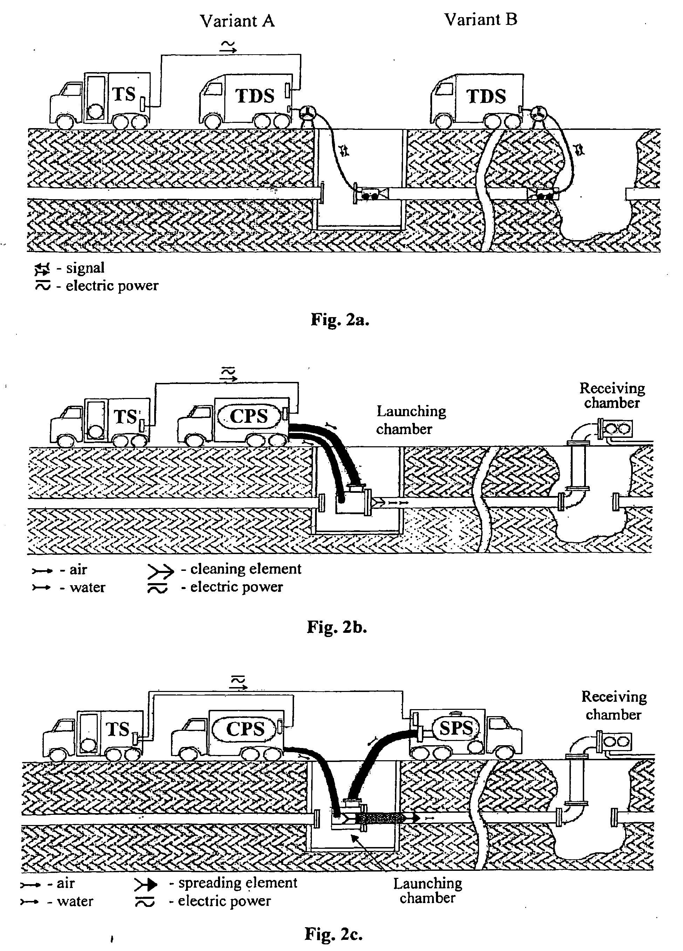

Prior to beginning the repair works, in order for determining the actual pipeline state, the teleinspection (telediagnosis) is performed, which allows to determine in the pipeline the unsurmountable obstacles in the form of the wrong made cut-in, foreign objects, deposits of the pipeline walls (up to 60 % of the nominal bore), presence of rust-through corrosion, etc. The robot P-100 (Fig. 2) is used for performing the teleinspection. The robot transmits an image to the control panel, and recording to the DVD is performed. If there are no explicit obstacles at the inner surface of the pipeline, the inspection is terminated, the robot is withdrawn from the pipeline, and in the case of discovering obstacles, some actions are performed to remove them, after which the method proceeds to cleaning the inner surface of the pipeline. The teleinspection is performed after each technological stage of the executed works.

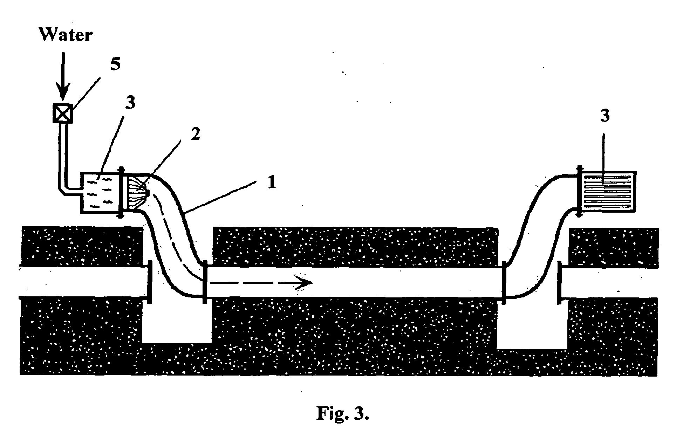

In order for cleaning the pipeline, the S-shaped technological pipe branches 1 (Fig. 3) are secured to the pipe being repaired through the flange connection in place of shutters being dismounted, the inner diameter of which pipe branches is equal to the inner diameter of the pipeline being repaired; the pipe branches are output above the ground level by 1 to 1.5 m, and all further technological repair stages are performed through these pipe branches, which allows to perform the works from the ground surface.

To the S-shaped technological pipe branch 1 mounted to the pipeline input and into which pipe branch the cleaning tool 2 (Fig. 3) is inserted in advance, the cleaning tool launching chamber 3 (Fig. 3) is secured through the flange connection, the launching chamber being a hollow metal cylinder, in which blind end there is an inlet connector, through which a liquid is fed under pressure of p = 2-5 atm causing the cleaning tool 2 to move and clean the inner surface of the pipeline. In order for feeding liquid during the step of cleaning are used a standard pump having the productivity of 10 to 20 m³/min and a set of crinkled rubber hoses ensuring liquid reception from the acting water system or reservoir and water supply to the cleaning tool (the step of cleaning 100 m pipe 300 to 400 mm in diameter requires 10 to 20 m³ of water). When moving along the pipe, the tool performs the cleaning, cuts off the deposits from the pipeline walls, water washes them away and removes them outward. The cleaning tool passes the 500 m section during 20 to 30 min depending on the pressure of the supplied water; upon finishing the cleaning the tool comes through the S-shaped output pipe branch 1 to the receiving chamber 3, the tool is removed from the chamber, the launching chamber is dismounted, the exhaust water with the purging is recovered. The pipeline is ready for making layer-by-layer a new pipe in the passageway of the old pipeline.

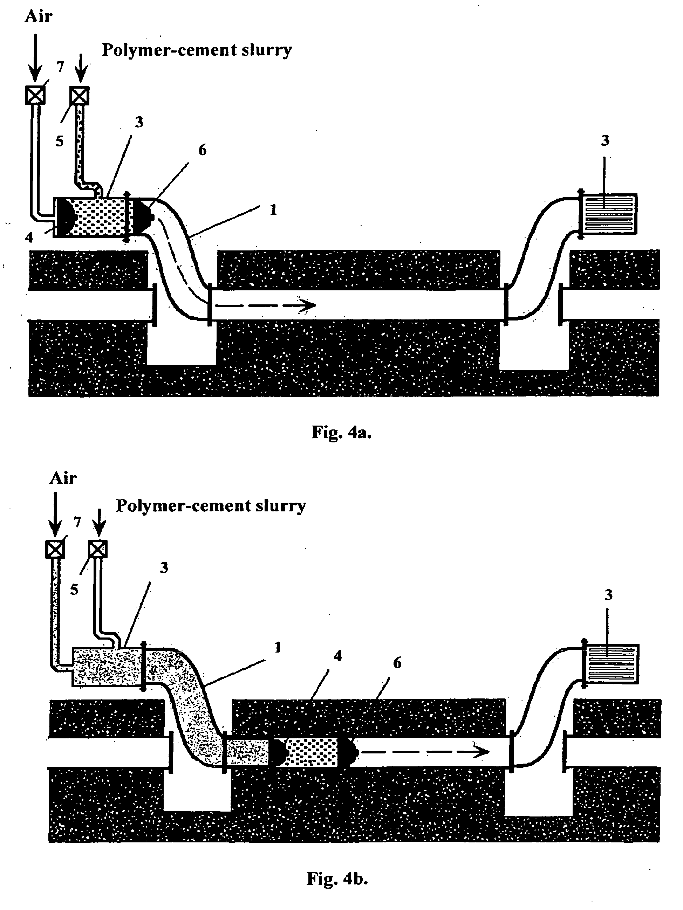

The coating is applied as follows: the elastic tool 6 (Fig. 4) is inserted into the S-shaped pipe branch of the pipeline input, the spreading applicator tool 4 (Fig. 4) is inserted into the launching spreading chamber 3 (Fig. 4), after which the launching chamber is mounted to the pipe branch (Fig. 4). The launching spreading chamber is provided with the fitting 5 (Fig. 4) through which the slurry is supplied, and the fitting 7 (Fig. 4) through which the compressed air is supplied. The spreading tools are made in the form of rubber pistons unitized from separate elements installed onto the flexible axles permitting the tools to pass up to 5 pipe branches and bends. The applicator tool 4 is assembled so that, while it moves forward, a cross-flow of the applied slurry between the repaired pipe wall and the tool body takes place. The spreading applicator tool 4 has at its end the coating forming collar operating as an annular applicator, and varying the diameter of this collar changes also the thickness of the layer being applied.

The polymer-cement slurry is pumped through the fitting 5 (Fig. 4) into the launching chamber 3 between the tools 4 and 6 (Fig. 4) by a concrete pump or pneumatic injector (for the slurries containing the steel and polymer fiber). The volume of the slurry being supplied is determined by the layer thickness multiplied by the area of the covered inner surface of the section being repaired. The slurry entering the launching chamber under pressure moves the elastic tool 6 inwards the pipe while filling a space between the tools. Upon injecting a required volume of the mixture into the launching chamber, the fitting 5 is shut off with a valve. The compressed air under pressure of p = 6-10 atm is supplied into the launching chamber through the fitting 7 (Fig. 4) from the accumulator tank with a respective volume or by a high capacity compressor. The air volume must be twice as large as the inner volume of the pipeline being repaired in order for the pressure being sufficient at the very end thereof, and the spreading tool could apply the polymer-cement layer throughout the length of the section being repaired and come out into the receiving chamber.

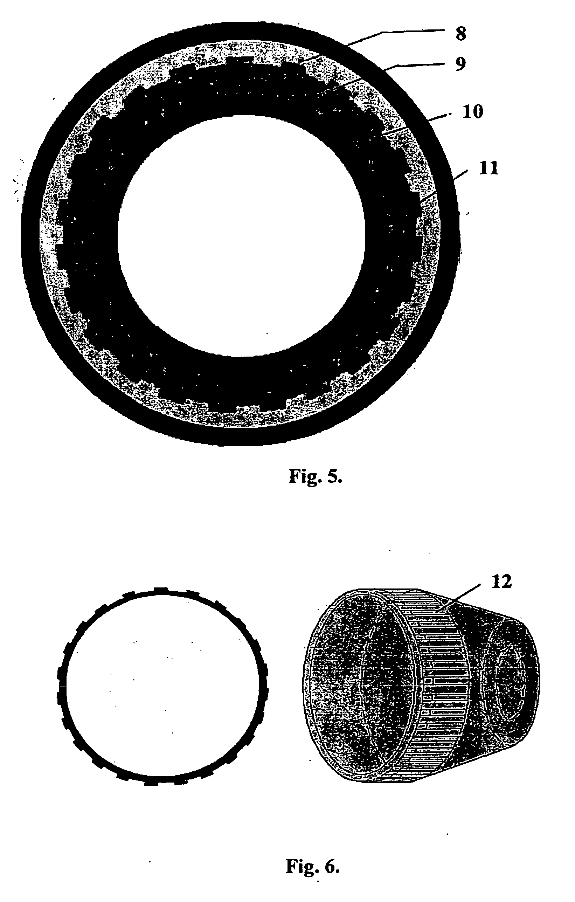

Repairing the pipeline 400 mm in diameter and 300 m long requires 350 m³ of the air under pressure of 5-6 atm. The compressed air supplied into the launching chamber produces a pressure zone behind the applicator tool 4 (Fig. 4), and the system consisting of two tools and the slurry therebetween begins to move forward. The spreading applicator tool 4 by means of overflowing the slurry through the application edges thereof begins to form the coating layer. As moving within the pipe, the distance between the tools decreases, and while approaching the tools to the pipe exit, upon performing the application of the uniform layer onto the inner surface of the pipeline, the tools come to the receiving chamber, from which they are withdrawn and washed. All subsequent layers are applied similarly. As a result the pipe is produced having the undercoat plugging layer 8, heavy-loaded layer 9 and protective layer 10 (Fig. 5).

In order for imparting an increased mechanical strength to the pipe being produced, the heavy-loaded layer having longitudinally disposed stiffening ribs 11 (Fig. 5) is used in the pipe. Increasing the strength characteristics is achieved not by the overall enlargement of the thickness of the layers forming the pipe, which could reduce essentially the inner diameter of the pipeline being restored and, as a consequence, results in a partial loss in capacity, but by means of structural solution for making the stiffening ribs within the layers of the pipe being produced. Producing the heavy-loaded layer having the stiffening ribs 11 is performed by the above method with the special spreading applicator tool having the collar with the profiled edge 12 (Fig. 6) forming the layer.

The method is carried out by the apparatus for applying layers of the restored pipeline, comprising an applicator tool in the form of elastic collars mounted successively on a flexible axle, herewith, in order for applying the undercoat plugging layer, the applicator tool being provided with a collar having a profiled edge 12, and, in order for applying the heavy-loaded layer, the applicator tool being provided with a smooth spreading edge, wherein, besides the collars having the profiled and smooth edges, the tool being additionally provided with technological collars having leaf-like resilient elements.

Fins could be 2 to 15 mm high and 10 to 20 mm wide and spaced 10 to 30 mm apart in a circumferential direction of the spreading collar. The necessary nominal size (fin width, height and spacing) is selected by exchangeable profiled collars.

During applying the undercoat plugging layer, the spreading tool provided with the profiled collar impresses longitudinal technological valleys in the body of the layer being applied. Upon hardening the undercoat plugging layer, the spreading tool having the smooth spreading edge applies the heavy-loaded layer from the "FORT" group mixture having a great content of the polyacrylic, carbon composite or metal fiber being an element of the inner reinforcement of the layer. The technological valleys are filled with the reinforced slurry transiting into the formed heavy-loaded layer, thus making together with that layer a single load-carrying structure. Upon polymerizing the layer, the next, operating layer is applied. Whereby, the pipe is obtained.

### Industrial Application

This method is carried out by the mobile repair complex (MRC) for restoring a pipeline. The production equipment (MRC) arranged on a car frame is an autonomous mini-plant for producing a polymer-cement pipe in the passageway of the pipeline being repaired, which mini-plant having a possibility for repairing pipelines 150 to 800 mm in diameter and a productivity up to 3,000 running meters per month.

In accordance with the technical regulations for executing work, the used equipment comprises: the technical station (TS); the telediagnosis station (the apparatus for the telemetric inspection of the pipeline) (TDS); the compressor-pumping station (CPS); slurry preparing station (SPS).

Thus, as a result of restoring the pipeline in accordance with the described technology, there is observed from the Table 1 the enhancement of the strength and operational characteristics of the applied coating and pipe structure as a whole, increase of the process workability, increase of the length of the section being repaired in a single technological cycle up to 1,000 m.

**Table 1**

| No. | Characteristic name | Standard value | | | | | |
|---|---|---|---|---|---|---|---|
| | | Fort 35 | Fort 40 | Fort 35F | Fort 40F | Fort 50 | Fort GT |
| 1 | Compression strength 28 days later, at least (MPa) | 35 | 40 | 35 | 40 | 50 | Laying thickness 4 mm |
| 2 | Compression strength 24 hours later, at least (MPa) | 4 | 6 | 4 | 6 | 30 | |
| 3 | Tension strength 28 days later, at least (MPa) | 8 | 10 | 12 | 14 | 15 | Pull strength from steel with treated by Fort GT as compared with the non-treated is 1.8 times greater |
| 4 | Tension strength 24 hours later, at least (MPa) | 2 | 3 | 4 | 6 | 10 | |
| 5 | Fiber filler | - | - | polymer | polymer | metal fiber | |
| 6 | Time interval of placeability, at least (min) | 40 | 30 | 40 | 30 | 30 | |
| 7 | Abradability, at most (g/cm²) | 0.40 | 0.35 | 0.40 | 0.35 | 0.35 | |
| 8 | Adhesion to metal, at least (MPa) | 0.5 | 0.5 | 0.5 | 0.5 | 0.8 | Comprises active corrosion inhibitors |
| 9 | Adhesion to metal after 10 cycles of heating to 100 °C, at least (MPa) | 0.25 | 0.25 | 0.25 | 0.25 | 0.50 | |
| 10 | Adhesion to metal after 10 cycles of heating to 140 °C, at least (MPa) | 0.2 | 0.2 | 0.2 | 0.2 | 0.40 | |
| 11 | Adhesion to concrete, at least (MPa) | 0.9 | 1.0 | 0.9 | 1.0 | 1.5 | |
| 12 | Grade for water impermeability, at least (W) | 10 | 12 | 10 | 12 | 12 | |
| 13 | Placeability (mm) | 170-200 | 170-200 | 170-200 | 170-200 | 175-195 | |

**Table 2**

| Layer designation | Portland cement, % | Dolomitic meal, % | Plastifier, % | Quartz sand, % | Polymer cementitious additive, % | Antifoamer, % | Water-retaining additive, % | Water, % | Fiber, % | | |
|---|---|---|---|---|---|---|---|---|---|---|---|
| | | | | | | | | | 1 | 2 | 3 |
| Protective operational layer FORT 40 FORT 35 | 33.2-35.7 grade 400 | 2.5-4.8 | 0.005-0.03 | 44.2-48.4 Grain size 0.1-0.63 | 1.1-2.7 | 0.02-0.06 | 0.04-1.2 | balance | - | - | - |
| | 38.0-42.0 grade 500 | 3.5-4.8 | 0.005-0.03 | 38.5-42.4 Grain size 0.1-0.63 | 1.2-3.5 | 0.03-0.075 | 0.05-1.2 | balance | - | - | - |
| Heavy-loaded layer FORT 50 FORT 40F FORT 35F | 29.0-34.3 grade 400 | 2.7-4.5 | 0.005-0.03 | 40.2-45.4 Grain size 0.1-0.63 | 1.1-3.0 | 0.02-0.06 | 0.03-1.0 | balance | 6.0-10.0 | - | - |
| | 29.0-34.3 grade 500 | 2.7-4.5 | 0.005-0.03 | 40.2-45.4 Grain size 0.1-0.63 | 1.1-3.0 | 0.02-0.06 | 0.03-1.0 | balance | - | 6.0-10.0 | - |
| | 29.0-34.3 grade 550 | 2.7-4.5 | 0.005-0.03 | 40.2-45.4 Grain size 0.1-0.63 | 1.1-3.0 | 0.02-0.06 | 0.03-1.0 | balance | - | - | 6.0-10.0 |
| Undercoat plugging layer FORT GT | 35.2-39.6 grade 400 | - | Corrosion inhibitor 0.4-2.1 | 41.2-45.4 Grain size 0.35 | 0.5-1.9 | Latex powder 3.0-7.0 | 0.03-0.07 | balance | - | - | - |

## Claims

1. A method for restoring a pipeline including steps of: performing a telemetric inspection of the pipeline; cleaning successively the pipeline from corrosion by forcing water disposed between elastic tools (4, 6) through the pipeline void; and applying an undercoat plugging layer (8) by forcing the concrete composition disposed between the first elastic tool (6) and the second elastic tool (4), it being an applicator tool, through the pipeline void; **characterized in that** the method further including, after the step of applying the undercoat plugging layer (8), step of applying successively layers in the passageway of the restored pipeline serving simultaneously as a formwork when making a new pipe, which layers carry functions of a heavy-loaded layer (9) being smooth or having longitudinally placed stiffening ribs and a protective operational layer (10), for which purpose the method including steps of: mounting a S-shaped technological pipe branch (1) at the input of the pipeline, inserting the first elastic tool (6) thereinto, providing the pipeline with a spreading chamber (3), inserting into that chamber the applicator tool (4) having exchangeable smooth collar or profiled collars, and mounting that chamber (3) onto the pipeline branch (1), whereupon pumping as the concrete composition between the tools a FORT group polymer-cement composition having a various content depending on the layer designation with the following component ratio, weight %:
for the undercoat plugging layer (8):
- Portland cement 400 35.2 - 39.6
- Quartz sand (grain size 0.35) 41.2 - 45.4
- Latex (in powder form) 3.0 - 7.0
- Corrosion inhibitor 0.4 - 2.1
- Water-retaining additive 0.03 - 0.07
- Polymer cementitious additive 0.5 - 1.9
- Water balance;
for the heavy-loaded layer (9):
- Portland cement 400 or 500 or 550 29.0 - 34.3
- Dolomitic meal 2.7 - 4.5
- Plastifier 0.005- 0.03
- Quartz sand (grain size 0.1-0.63) 40.2 - 45.2
- Polymer cementitious additive 1.1 - 3.0
- Antifoamer 0.02 - 0.06
- Water-retaining additive 0.03 - 1.0
- Polyacrylonitrile or carbon composite or 6.0 - 10.0 chrome-nickel fiber
- Water balance;
for the operational layer (10):
- Portland cement 400 or 500 33.2 - 42.0
- Dolomitic meal 2.5 - 4.8
- Plastifier 0.005- 0.03
- Quartz sand (grain size 0.1-0.63) 38.5 - 48.4
- Polymer cementitious additive 1.1 - 3.5
- Antifoamer 0.02 - 0.075
- Water-retaining additive 0.04 - 1.2
- Water balance;
wherein, during the step of applying the heavy-loaded layer (9) having longitudinally placed stiffening ribs using the applicator tool (4) provided with the profiled collar, performing a step of making longitudinal technological valleys in the body of the undercoat plugging layer (8) being applied, and upon setting this layer, performing a step of applying by the applicator tool (4) having the smooth application edge the heavy-loaded layer (9) from the FORT group polymer-cement composition rich of polyacrylic, carbon composite or metal fiber, which heavy-loaded layer (9) fills the technological valleys thus forming the longitudinal stiffening ribs.

2. A pipeline restored by the method of claim 1, including the restored pipeline itself and the undercoat plugging layer (8), **characterized in that** the pipeline further comprising layers that carry functions of a heavy-loaded layer (9) being smooth or having longitudinally placed stiffening ribs disposed between the undercoat plugging layer (8) and heavy-loaded layer (9), and a protective operational layer (10) from a FORT group polymer-cement composition having a various content depending on the layer designation, thus forming a single system construction of the new pipe, with the following component ratio, weight %:
for the undercoat plugging layer (8):
- Portland cement 400 35.2 - 39.6
- Quartz sand (grain size 0.35) 41.2 - 45.4
- Latex (in powder form) 3.0 - 7.0
- Corrosion inhibitor 0.4 - 2.1
- Water-retaining additive 0.03 - 0.07
- Polymer cementitious additive 0.5 - 1.9
- Water balance;
for the heavy-loaded layer (9):
- Portland cement 400 or 500 or 550 29.0 - 34.3
- Dolomitic meal 2.7 - 4.5
- Plastifier 0.005- 0.03
- Quartz sand (grain size 0.1-0.63) 40.2 - 45.2
- Polymer cementitious additive 1.1 - 3.0
- Antifoamer 0.02 - 0.06
- Water-retaining additive 0.03 - 1.0
- Polyacrylonitrile or carbon composite or 6.0 - 10.0 chrome-nickel fiber
- Water balance;
for the operational layer (10):
- Portland cement 400 or 500 33.2 - 42.0
- Dolomitic meal 2.5 - 4.8
- Plastifier 0.005- 0.03
- Quartz sand (grain size 0.1-0.63) 38.5 - 48.4
- Polymer cementitious additive 1.1 - 3.5
- Antifoamer 0.02 - 0.075
- Water-retaining additive 0.04 - 1.2
- Water balance.

## Patentansprüche

1. Verfahren zur Wiederherstellung einer Rohrleitung, das die Schritte umfasst: Durchführung einer telemetrischen Inspektion der Rohrleitung; anschließende Reinigung der Rohrleitung von Korrosion dadurch, dass man Wasser, das zwischen elastischen Werkzeugen (4,6) angeordnet ist, durch den Hohlraum der Rohrleitung drückt; und Aufbringen einer Grundierungs-Verschlussschicht (8) dadurch, dass man eine Zementzusammensetzung, die zwischen dem ersten elastischen Werkzeug (6) und dem zweiten elastischen Werkzeug (4), das ein Ausstreichwerkzeug darstellt, durch den Hohlraum der Rohrleitung drückt, **dadurch gekennzeichnet, dass** das Verfahren, nach der Stufe des Aufbringens der Grundierungs-Verschlussschicht (8) außerdem eine Stufe des aufeinanderfolgenden Aufbringens von Schichten im Leitungsweg der wiederhergestellten Rohrleitung einschließt, die gleichzeitig als Schalung bei der Herstellung eines neuen Rohres dient, wobei diese Schichten die Funktionen einer Hochlast-Schicht (9), die glatt ist oder in Längsrichtung angeordnete Versteifungsrippen aufweist, sowie einer schützenden Arbeitsschicht (10) aufweisen, wobei das Verfahren für diesen Zweck die Schritte umfasst: Montieren eines S-förmigen technologischen Rohransatzes (1) am Einlass der Rohrleitung, Einschieben des ersten elastischen Werkzeugs (6) in dieses, Versehen der Rohrleitung mit einer Verteilerkammer (3), Einschieben in diese Kammer des Ausstreichwerkzeugs (4) mit einem austauschbarem glatten Kragen oder mit Profilkrägen, und Montieren dieser Kammer (3) auf den Rohransatz (1), wonach man als Zementzusammensetzung zwischen die Werkzeugen als Zementzusammensetzung eine Polymer-Zement-Zusammensetzung der FORT-Gruppe einpumpt, die eine in Abhängigkeit von der Bestimmung der Schicht variable Zusammensetzung aufweist,
wobei das Verhältnis der Bestandteile in Gewichtsprozent wie folgt ist:
für die Grundierungs-Verschlussschicht (8):
- Portlandzement 400 35,2 - 39,6
- Quarzsand (Korngröße 0,35) 41,2 - 45,4
- Latex (in Pulverform) 3,0 - 7,0
- Korrosionsinhibitor 0,4 - 2,1
- Wasserrückhalte-Zusatz 0,03 - 0,07
- Polymerzement-Zusatz 0,5 - 1,9
- Wasser Rest;
für die Hochlast-Schicht (9):
- Portlandzement 400 oder 500 oder 550 29,0 - 34,3
- Dolomitmehl 2,7 - 4,5
- Plastifikator 0,005 - 0,03
- Quarzsand (Korngröße 0,1-0,63) 40,2 - 45,2
- Polymerzement-Zusatz 1,1 - 3,0
- Antischaummittel 0,02 - 0,06
- Wasserrückhalte-Zusatz 0,03 - 1,0
- Polyacrylnitril- oder Kohlenstoffverbund- oder Chrom-Nickel-Faser 6,0 - 10,0
- Wasser Rest;
für die Arbeitsschicht (10):
- Portlandzement 400 oder 500 33,2 - 42,0
- Dolomitmehl 2,5 - 4,8
- Plastifikator 0,005 - 0,03
- Quarzsand (Korngröße 0,1-0,63) 38,5 - 48,4
- Polymerzement-Zusatz 1,1 - 3,5
- Antischaummittel 0,02 - 0,075
- Wasserrückhalte-Zusatz 0,04 - 1,2
- Wasser Rest;
wobei während der Stufe der Erzeugung der Hochlast-Schicht (9) mit in Längsrichtung angeordneten Versteifungsrippen unter Verwendung eines Ausstreichwerkzeugs (4) mit dem profiliertem Kragen eine Stufe der Erzeugung längs verlaufender technologischer Täler im Körper der aufgebrachten Grundierungs-Verschlussschicht (8) durchgeführt wird und, nach Aushärten dieser Schicht, eine Stufe des Aufbringens der Hochlast-Schicht (9) mit Hilfe des Ausstreichwerkzeugs (4) mit der glatten Aufbringkante aus der Polymer-Zement-Zusammensetzung aus der FORT-Gruppe, die reich an Polyacryl-, Kohlenstoffverbund- oder Metall-Faser ist, durchgeführt wird, wobei die Hochlast-Schicht (9) die technologischen Täler ausfüllt, wodurch auf diese Weise die längs verlaufenden Versteifungsrippen gebildet werden.

2. Rohrleitung, die nach dem Verfahren von Anspruch 1 wiederhergestellt wurde, die die wiederhergestellte Rohrleitung als solche sowie eine Grundierungs-Verschlussschicht (8) aufweist, **dadurch gekennzeichnet, dass** die Rohrleitung außerdem Schichten aufweist, die die Funktionen einer Hochlast-Schicht (9), die glatt ist oder in Längsrichtung angeordnete Versteifungsrippen aufweist, die zwischen der Grundierungs-Verschlussschicht (8) und der Hochlast-Schicht (9) angeordnet sind, sowie einer schützenden Arbeitsschicht (10) aufweisen, aus einer Polymer-Zement-Zusammensetzung der FORT-Gruppe mit einer variierenden Zusammensetzung in Abhängigkeit von der Bestimmung der Schicht, wobei auf diese Weise eine einheitliche Systemkonstruktion der neuen Rohrleitung gebildet wird, wobei das Verhältnis der Bestandteile in Gewichtsprozent wie folgt ist:
für die Grundierungs-Verschlussschicht (8):
- Portlandzement 400 35,2 - 39,6
- Quarzsand (Korngröße 0,35) 41,2 - 45,4
- Latex (in Pulverform) 3,0 - 7,0
- Korrosionsinhibitor 0,4 - 2,1
- Wasserrückhalte-Zusatz 0,03 - 0,07
- Polymerzement-Zusatz 0,5 - 1,9
- Wasser Rest;
für die Hochlast-Schicht (9):
- Portlandzement 400 oder 500 oder 550 29,0 - 34,3
- Dolomitmehl 2,7 - 4,5
- Plastifikator 0,005 - 0,03
- Quarzsand (Korngröße 0,1-0,63) 40,2 - 45,2
- Polymerzement-Zusatz 1,1 - 3,0
- Antischaummittel 0,02 - 0,06
- Wasserrückhalte-Zusatz 0,03 - 1,0
- Polyacrylnitril- oder Kohlenstoffverbund- oder Chrom-Nickel-Faser 6,0 - 10,0
- Wasser Rest;
für die Arbeitsschicht (10):
- Portlandzement 400 oder 500 33,2 - 42,0
- Dolomitmehl 2,5 - 4,8
- Plastifikator 0,005 - 0,03
- Quarzsand (Korngröße 0,1-0,63) 38,5 - 48,4
- Polymerzement-Zusatz 1,1 - 3,5
- Antischaummittel 0,02 - 0,075
- Wasserrückhalte-Zusatz 0,04 - 1,2
- Wasser Rest.

## Revendications

1. Procédé pour la restauration d'une canalisation, incluant les étapes consistant à : exécuter une inspection télémétrique de la canalisation ; nettoyer ensuite la canalisation de la corrosion en forçant de l'eau, disposée entre des outils élastiques (4, 6), à travers la cavité de la canalisation ; et appliquer une couche de colmatage et d'apprêt (8) en forçant une composition de ciment disposée entre le premier outil élastique (6) et le second outil élastique (6), celui-ci étant un outil applicateur, à travers la cavité de la canalisation ; **caractérisé en ce que** le procédé inclut en outre, après l'étape consistant à appliquer la couche de colmatage et d'apprêt (8), une étape consistant à appliquer successivement des couches dans le passage de la canalisation restaurée servant simultanément de coffrage pour la réalisation d'une nouvelle canalisation, ces couches assurant les fonctions d'une couche à forte charge (9) qui est lisse ou qui comporte des nervures de raidissage disposées longitudinalement, et une couche fonctionnelle protectrice (40), le procédé incluant à cet effet des étapes consistant à : monter une ramification tubulaire technologique (1) en forme de S à l'entrée de la canalisation, insérer dans celle-ci le premier outil élastique (6), doter la canalisation d'une chambre de répartition (3), insérer dans cette chambre l'outil applicateur (4) ayant un collier lisse interchangeable ou des colliers profilés, et monter cette chambre (3) sur la ramification tubulaire (1), suite à quoi on pompe à titre de composition de ciment entre les outils une composition de ciment-polymère du groupe FORT ayant une composition variable en fonction de la destination de la couche, avec les rapports suivants entre les composants, exprimés en pourcentage en poids :
pour la couche de colmatage et d'apprêt (8) :
- ciment Portland 400 35,2 - 39,6
- sable de quartz (granulométrie 0,35) 41,2 - 45,4
- latex (en forme de poudre) 3,0 - 7,0
- inhibiteur de corrosion 0,4 - 2,1
- additif de rétention d'eau 0,03 - 0,07
- additif de ciment polymère 0,5 - 1,9
- eau reste ;
pour la couche à forte charge (9) :
- ciment Portland 400 500 ou 550 29,0 - 34,3
- poudre de dolomite 2,7 - 4,5
- plastifiant 0,005 - 0,03
- stable de quartz (granulométrie 0,1-0,63) 40,2 - 45,2
- additif de ciment polymère 1,1 - 3,0
- agent anti-moussant 0,02 - 0,06
- additif de rétention d'eau 0,03 - 1,0
- fibres en polyacrylonitrile ou en composite de carbone ou en chrome-nickel 6,0 -10,0
- eau reste ;
pour la couche fonctionnelle (10) :
- ciment Portland 400 ou 500 33,2 - 42,0
- poudre de dolomite 2,5 - 4,8
- plastifiant 0,005 - 0,03
- sable de quartz (granulométrie 0,1-0,63) 38,5 -48,4
- additif de ciment polymère 1,1-3,5
- agent anti-moussant 0,02 - 0,075
- additif de rétention d'eau 0,04 -1,2
- eau reste ;
dans lequel, pendant l'étape consistant à appliquer la couche à forte charge (9) ayant des nervures de raidissage placées longitudinalement en utilisant un outil applicateur (4) avec le collier profilé, on exécute une étape consistant à pratiquer des vallées technologiques longitudinales dans le corps de la couche de colmatage et d'apprêt (8) et, après prise de cette couche, on exécute une étape consistant à appliquer avec l'outil applicateur (4) présentant une arête d'application lisse la couche à forte charge (9) formée de la composition polymère-ciment du groupe FORT, riche en fibres polyacryliques, en composite au carbone ou en métal, ladite couche à forte charge (9) remplissant les vallées technologiques en formant ainsi les nervures de raidissage longitudinales.

2. Canalisation restaurée par le procédé de la revendication 1, incluant la canalisation restaurée elle-même et la couche de colmatage et d'apprêt (8), **caractérisée en ce que** la canalisation comprend en outre des couches qui remplissent des fonctions d'une couche à forte charge (9) qui est lisse ou qui présente des nervures de raidissage placées longitudinalement, disposées entre la couche de colmatage et d'apprêt (9) et la couche à forte charge (9), et une couche opérationnelle protectrice (10) en une composition ciment-polymère du groupe FORT ayant une composition variable en fonction de la destination de la couche, formant ainsi une construction à système unique de la nouvelle canalisation, avec les rapports suivants entre les composants, exprimés en pourcentage en poids :
pour la couche de colmatage et d'apprêt (8) :
- ciment Portland 400 35,2 - 39,6
- sable de quartz (granulométrie 0,35) 41,2 - 45,4
- latex (en forme de poudre) 3,0 - 7,0
- inhibiteur de corrosion 0,4 - 2,1
- additif de rétention d'eau 0,03 - 0,07
- additif de ciment polymère 0,5 -1,9
- eau reste ;
pour la couche à forte charge (9) :
- ciment Portland 400 500 ou 550 29,0 - 34,3
- poudre de dolomite 2,7 - 4,5
- plastifiant 0,005 - 0,03
- stable de quartz (granulométrie 0,1-0,63) 40,2 -45,2
- additif de ciment polymère 1,1 - 3,0
- agent anti-moussant 0,02 - 0,06
- additif de rétention d'eau 0,03 -1,0
- fibres en polyacrylonitrile ou en composite de carbone ou en chrome-nickel 6,0 - 10,0
- eau reste ;
pour la couche fonctionnelle (10) :
- ciment Portland 400 ou 500 33,2 - 42,0
- poudre de dolomite 2,5 - 4,8
- plastifiant 0,005 - 0,03
- sable de quartz (granulométrie 0,1-0,63) 38,5 -48,4
- additif de ciment polymère 1,1-3,5
- agent anti-moussant 0,02 - 0,075
- additif de rétention d'eau 0,04 -1,2
- eau reste.
